# FASCICULE DE BREVET EUROPEEN

(11) **EP 1 583 325 B1**
(45) Date de publication et mention de la délivrance du brevet: **03.10.2012**
(21) Numéro de dépôt: 05290636.9
(22) Date de dépôt: 23.03.2005
(51) Int. Cl.: H04L 29/06

(54) **Procédé d'échange d'informations sous protocole IP avec substitution de données dans le champ TOS**
Verfahrensweise des Informationsaustausches unter IP-Protokoll mit Angabensubstitution im TOS-Feld
Method of exchange of information under protocol IP with substitution of data in TOS field

(30) Priorité: 30.03.2004 FR 0403279
(43) Date de publication de la demande: 05.10.2005
(73) Titulaire: Sagem Défense Sécurité, 75015 Paris (FR)
(72) Inventeur: Jacquet, Adeline, 75014 Paris (FR); Brive, Robert, 95300 Herouville (FR); Declety, Benjamin, 92100 Boulogne Billancourt (FR)
(74) Mandataire: Lavialle, Bruno François Stéphane

(56) Documents cités:
- US-A1- 2003 084 174
- ALMQUIST P: "TYPE OF SERVICE IN THE INTERNET PROTOCOL SUITE" NETWORK WORKING GROUP REQUEST FOR COMMENTS, XX, XX, juillet 1992 (1992-07), pages 1-25, XP002909776

## Description

La présente invention concerne un procédé d'échange d'informations dans un réseau utilisant le protocole Internet (IP).

### ARRIERE PLAN DE L'INVENTION

On rappelle que le protocole Internet est un protocole de couche réseau qui fait entre autres l'objet du rapport technique RFC 791 de la Communauté Internet (ou IETF "Internet Engineering Task Force").

Selon ce protocole, les informations sont transmises sous forme de datagrammes possédant un en-tête dans lequel figurent notamment des paramètres de contrôle, des paramètres de routage et des paramètres d'adressage (adresses IP) qui permettent aux informations d'être routées entre deux équipements du réseau. Les paramètres de routage sont contenus dans un champ type de service (plus connu sous le nom de champ TOS pour "type of service") défini notamment dans les rapports techniques RFC 1349 et RFC 1455 qui spécifient la taille de ce champ et la nature des paramètres de routage (priorité, fiabilité, qualité...) .

Il existe des avions comportant des réseaux internes utilisant le protocole Internet. Ces réseaux incluent un réseau public de serveurs utilisé notamment par l'équipage pour obtenir des informations sur le vol ou les passagers, sur les aéroports empruntés... et pour permettre aux passagers d'accéder à des moyens de divertissement et un réseau sécurisé utilisé pour le fonctionnement de l'avion lui-même. Le réseau public est faiblement sécurisé et est relié au réseau sécurisé par l'intermédiaire d'un dispositif de protection et de routage. Le réseau public peut également être relié par un dispositif de routage classique au réseau Internet. Le document US 2003/084174 A1 décrit un procédé d'échanges d'informations entre des ordinateurs d'un réseau embarqué sur un avion. Il est prévu d'affecter des adresses à ces ordinateurs et d'autoriser l'échange d'informations en fonction de ces adresses.

Afin d'éviter que des datagrammes provenant d'équipements non autorisés qui seraient raccordés au réseau faiblement sécurisé ne viennent perturber le réseau sécurisé, le dispositif de protection et de routage n'est habilité à transmettre les datagrammes provenant du réseau non sécurisé que s'il est à même d'identifier le serveur qui a émis le datagramme et que ce serveur est bien un des serveurs embarqués dans l'avion.

Pour ce faire, il est possible d'identifier un serveur émettant un datagramme à partir de l'adresse IP de l'en-tête du datagramme ou de l'adresse MAC (« Media Access Control" ») qui est propre à chaque interface des éléments de réseau et qui figure dans le datagramme de couche accès réseau qui encapsule le datagramme du protocole Internet. Toutefois, lorsque les serveurs comportent un grand nombre d'interfaces désignées par des adresses IP statiques ou dynamiques, il serait nécessaire que le dispositif de protection et de routage vers le réseau sécurisé dispose d'une importante table mettant en relation chaque serveur avec les adresses IP qui lui correspondent. De la même manière avec les adresses MAC, comme le dispositif de protection et de routage est configuré pour être implanté dans plusieurs avions disposant chacun de serveurs, il est nécessaire qu'il intègre une table contenant les adresses MAC de tous les serveurs auxquels il est susceptible d'être raccordé. L'utilisation de telles tables nécessite des ressources informatiques importantes dont ne dispose pas le dispositif de protection et de routage vers le réseau sécurisé.

### OBJET DE L'INVENTION

Un but de l'invention est de proposer un procédé d'échange d'informations par protocole Internet sous forme de datagrammes comprenant un champ type de service normalement dédié à recevoir des paramètres de routage, les informations circulant dans un réseau comprenant des équipements d'un premier type et au moins un équipement d'un deuxième type, le procédé permettant à l'équipement du deuxième type d'identifier de façon simple les équipements du premier type ayant émis un datagramme dans sa direction.

### BREVE DESCRIPTION DE L'INVENTION

A cet effet, on prévoit, selon l'invention, un procédé comprenant les étapes de :
- configurer les équipements du réseau pour définir dans le champ type de service une zone d'identification,
- associer aux équipements du premier type des identifiants codables dans la zone d'identification du champ type de service,
- dans l'équipement du deuxième type, mémoriser une table d'identifiants autorisés,
- lors de l'émission d'un datagramme par un des équipements du premier type vers l'équipement du deuxième type, coder dans la zone d'identification l'identifiant de l'équipement du premier type concerné et, à la réception du datagramme par l'équipement du deuxième type, lire l'identifiant et vérifier qu'il figure dans la table des identifiants autorisés avant d'accepter le datagramme.

Les identifiants sont associés aux équipements du premier type en fonction par exemple des tâches effectuées par ces équipements ou de leurs emplacements dans le réseau. L'identifiant permet alors à l'équipement du deuxième type de déterminer s'il est autorisé à recevoir et transmettre des datagrammes provenant d'un équipement du premier type qu'elles que soient les adresses IP et MAC de cet équipement.

De préférence, la zone identification comprend au moins un bit normalement inutilisé dans le champ type de service.

L'utilisation de ce bit qui n'est pas utilisé pour recevoir des paramètres de routage n'affecte pas les performances du réseau.

Avantageusement, le réseau étant relié par un dispositif de routage à un réseau externe, le procédé comprend l'étape de, à la réception par le dispositif de routage d'un datagramme provenant du réseau externe, coder un identifiant non autorisé dans les bits du champ type de service qui correspondent à la zone d'identification.

Ainsi, les datagrammes provenant du réseau externe comportent un identifiant non autorisé de sorte qu'ils sont rejetés par l'équipement du deuxième type.

De préférence, le procédé comprend l'étape de répartir les équipements du premier type selon des groupes comprenant chacun au moins un des équipements du premier type, les identifiants étant associés aux groupes.

La répartition des équipements du premier type selon des groupes est en particulier intéressante lorsque le nombre d'équipements du premier type est supérieur au nombre d'identifiants qu'il est possible de coder dans la zone identification du champ type de service. Répartir les équipements du premier type selon des groupes et affecter un identifiant à chaque groupe permet alors de réduire le nombre d'identifiants nécessaires.

D'autres caractéristiques et avantages de l'invention ressortiront à la lecture de la description qui suit d'un mode de réalisation particulier non limitatif de l'invention.

### BREVE DESCRIPTION DES DESSINS

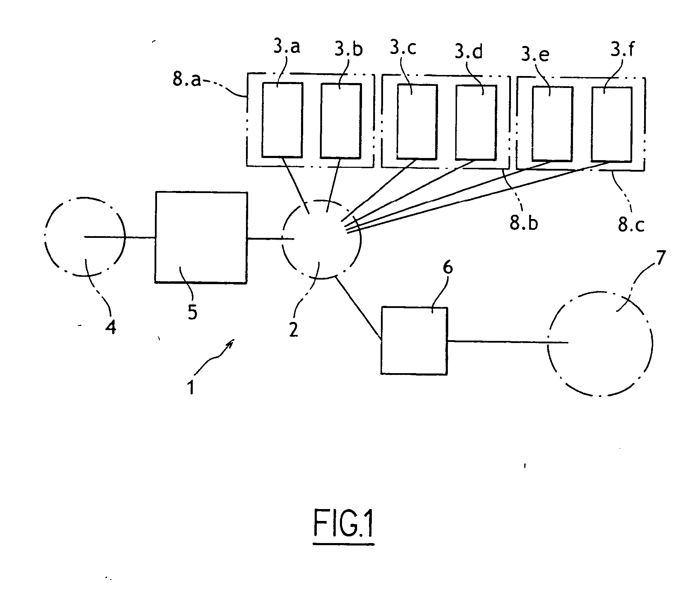

Il sera fait référence à la figure unique annexée représentant une vue schématique d'un réseau mettant en oeuvre le procédé de l'invention.

### DESCRIPTION DETAILLEE DE L'INVENTION

En référence à la figure, le procédé de l'invention est ici décrit en relation avec un réseau généralement désigné en 1 embarqué par exemple à bord d'un avion.

Le réseau 1 comprend un réseau 2 de serveurs 3.a à 3.f et un réseau sécurisé 4 relié au réseau 2 par un dispositif de protection et de routage 5. Le dispositif de protection et de routage 5 est connu en lui même et comprend un routeur associé à un élément de filtrage de type DMZ (pour « demilitarized zone »). Le réseau 2 est moins sécurisé que le réseau sécurisé 4.

Le réseau 2 est en outre relié par un routeur 6 à un réseau externe, ici le réseau Internet 7.

Le réseau fonctionne ici sous la version 4 du protocole Internet (IP) qui prévoit l'échange d'informations sous forme de datagrammes IP comprenant un entête dans lequel figurent des paramètres de contrôle, de routage et d'adressage.

Le procédé de l'invention comprend l'étape de répartir les serveurs 3.a à 3.f selon trois groupes 8. Le groupe 8.a comprend les serveurs 3.a, 3.b, le groupe 8.b les serveurs 3.c, 3.d et le groupe 8.c les serveurs 3.e, 3.f.

A chaque groupe 8.a, 8.b, 8.c est associé un identifiant codé sur deux bits, à savoir 01, 11 et 10 respectivement.

Les serveurs 3.a à 3.c sont configurés pour définir dans le champ type de service du datagramme IP une zone d'identification comprenant les deux derniers bits de ce champ (le dernier étant un bit habituellement non utilisé).

Une table d'identifiants autorisés est mémorisée dans le dispositif de protection et de routage 5.

Lors de l'émission d'un datagramme par un serveurs, par exemple le serveur 3.a, vers le réseau sécurisé 4, l'identifiant 01 du groupe 8.a auquel le serveur 3.a est rattaché est codé dans la zone d'identification du champ type de service du datagramme.

Le datagramme est dirigé vers le dispositif de protection et de routage 5.

A la réception du datagramme par le dispositif de protection et de routage 5, l'identifiant est lu et le dispositif de protection et de routage 5 est configuré pour vérifier que l'identifiant figure dans la table des identifiants autorisés.

Si l'identifiant figure dans la table, le datagramme est accepté et transmis vers le réseau sécurisé 4. Dans le cas contraire, le datagramme est éliminé.

A la réception d'un datagramme provenant du réseau Internet 7, le routeur 6 est configuré pour coder un identifiant non autorisé dans les bits du champ type de service qui correspondent à la zone d'identification (c'est-à-dire les deux derniers bits de ce champ). En l'occurrence, le routeur 6 met ces bits à zéro. Ainsi, aucun datagramme provenant du réseau Internet 7 ne peut être acheminé vers le réseau 4.

On notera que le champ type de service n'est pas exploité de manière classique dans le réseau 4, au moins en ce qui concerne les deux derniers bits de ce champ.

Bien entendu, l'invention n'est pas limitée au mode de réalisation décrit et on peut y apporter des variantes de réalisation sans sortir du cadre de l'invention tel que défini par les revendications.

En particulier, l'architecture du réseau peut être différente de celle décrite. Le réseau 2 peut ainsi comprendre un nombre différent de serveurs et/ou d'autres équipements, et le nombre de groupes peut être différent en fonction du nombre de serveurs ou plus généralement d'équipements du réseau 2 et du nombre de bits utilisés pour la zone d'identification du champ type de service. Ce nombre de bits peut être différent de deux et n'est limité que par la taille du champ type de service. Le nombre d'équipements rattachés aux groupes peut varier d'un groupe à l'autre.

En outre, le réseau 1 peut être plus complexe. Les réseaux 2 et 4 peuvent être reliés l'un à l'autre par l'intermédiaire de deux dispositifs de protection et de routage raccordés de manière sélective, éventuellement en alternance, au réseau 4 et de deux dispositifs de routage reliés chacun aux deux dispositifs de protection et de routage et au réseau 2. Cet agencement permet de disposer d'un dispositif de routage de secours en cas de défaillance de l'un des deux dispositifs de routage.

## Revendications

1. Procédé d'échange d'informations par protocole Internet sous forme de datagrammes comprenant un champ type de service normalement dédié à recevoir des paramètres de routage, les informations circulant dans un réseau (1) comprenant des équipements d'un premier type (3) et au moins un équipement d'un deuxième type (5), **caractérisé en ce que** le procédé comprend les étapes de :
- configurer les équipements du réseau pour définir dans le champ type de service une zone d'identification,
- associer aux équipements du premier type des identifiants codables dans la zone d'identification du champ type de service,
- dans l'équipement du deuxième type, mémoriser une table d'identifiants autorisés,
- lors de l'émission d'un datagramme par un des équipements du premier type vers l'équipement du deuxième type, coder dans la zone d'identification l'identifiant de l'équipement du premier type concerné et, à la réception du datagramme par l'équipement du deuxième type, lire l'identifiant et vérifier qu'il figure dans la table des identifiants autorisés avant d'accepter le datagramme.

2. Procédé selon la revendication 1, **caractérisé en ce que** la zone d'identification comprend au moins un bit normalement inutilisé dans le champ type de service.

3. Procédé selon la revendication 1, **caractérisé en ce que**, le réseau (1) étant relié par un dispositif de routage (6) à un réseau externe (7), le procédé comprend l'étape de, à la réception par le dispositif de routage d'un datagramme provenant du réseau externe, coder un identifiant non autorisé dans des bits du champ type de service qui correspondent à la zone d'identification.

4. Procédé selon la revendication 1, **caractérisé en ce qu'**il comprend l'étape de répartir les équipements du premier type (3) selon des groupes (8) comprenant chacun au moins un des équipements du premier type et **en ce que** les identifiants sont associés aux groupes.

## Claims

1. Method of exchanging information by the Internet protocol in the form of datagrams each including a type of service (TOS) field normally dedicated to receiving routing parameters, the information traveling over a network (1) comprising equipment of a first type (3), and at least one piece of equipment of a second type (5), **characterized in that** the method comprises the steps of:
• configuring the network equipment to define an identification zone in the TOS field;
• associating the equipment of the first type with identifiers that can be encoded in the identification zone of the TOS field;
• storing a table of authorized identifiers in the equipment of the second type; and
• when a datagram is issued by a piece of equipment of the first type for reception by the piece of equipment of the second type, encoding the identifier of the piece of equipment of the first type in question in the identification zone, and on the datagram being received by the piece of equipment of the second type, reading the identifier and checking whether it appears in the table of authorized identifiers before accepting the datagram.

2. Method according to claim 1, wherein the identification zone includes at least one normally-unused bit of the TOS field.

3. Method according to claim 1, wherein the network (1) is connected by a routing device (6) to an external network (7), and the method includes the step, on the routing device receiving a datagram coming from the external network, of encoding a non-authorized identifier in the bits of the TOS field that correspond to the identification zone.

4. Method according to claim 1, including a step of organizing the equipment of the first type (3) in groups (8) each containing at least one piece of equipment of the first type, and wherein the identifiers are associated with the groups.

## Patentansprüche

1. Verfahren zum Informationsaustausch über das Internetprotokoll in Form von Datagrammen, die ein Servicefeld umfassen, das normalerweise dazu gedacht ist, Router-Parameter zu empfangen, wobei die Informationen in einem Netzwerk (1) zirkulieren, das Geräte eines ersten Typs (3) und mindestens ein Gerät eines zweiten Typs (5) umfasst, **dadurch gekennzeichnet, dass** das Verfahren die folgenden Schritte umfasst:
- Konfigurieren der Geräte des Netzwerks, um im Servicefeld eine Identifikationszone zu definieren,
- Zuordnen von kodierbaren Kennungen zu den Geräten des ersten Typs in der Identifikationszone des Servicefeldes,
- Speichern einer Tabelle autorisierter Kennungen im Gerät des zweiten Typs,
- während der Emission eines Datagramms durch ein Gerät des ersten Typs in Richtung des Geräts des zweiten Typs Kodieren der Kennung des betreffenden Geräts des ersten Typs in der Identifikationszone und bei Empfang des Datagramms durch das Gerät des zweiten Typs Lesen der Kennung und Verifizieren, dass sie in der Tabelle der autorisierten Kennungen enthalten ist, bevor das Datagramm akzeptiert wird.

2. Verfahren nach Anspruch 1, **dadurch gekennzeichnet, dass** die Identifikationszone mindestens ein Bit umfasst, das normalerweise im Servicefeld ungenutzt ist.

3. Verfahren nach Anspruch 1, **dadurch gekennzeichnet, dass** das Netzwerk (1) über einen Router (6) an ein externes Netzwerk (7) angeschlossen ist, wobei das Verfahren den Schritt umfasst, bei Empfang eines Datagramms, das aus einem externen Netzwerk stammt, durch die Router-Vorrichtung eine nicht autorisierte Kennung in den Bits des Servicefeldes zu kodieren, die der Identifikationszone entsprechen.

4. Verfahren nach Anspruch 1, **dadurch gekennzeichnet, dass** es den Schritt umfasst, die Geräte des ersten Typs (3) in Gruppen (8) aufzuteilen, wobei jede Gruppe mindestens ein Gerät des ersten Typs umfasst, und dass die Kennungen den Gruppen zugeordnet werden.
